# EUROPÄISCHE PATENTSCHRIFT

(11) **EP 4 332 024 B1**
(45) Veröffentlichungstag und Bekanntmachung des Hinweises auf die Patenterteilung: **04.12.2024**
(21) Anmeldenummer: 23000180.2
(22) Anmeldetag: 16.10.2020
(51) Int. Cl.: G01G 23/12, G01G 11/00, G01G 19/03, B65G 39/09, B65G 15/60

(54) **FÖRDERBANDWAAGE MIT FÖRDERBAND SOWIE FÖRDERBANDKÖRPER**
CONVEYOR BELT SCALE WITH CONVEYOR BELT AND CONVEYOR BELT BODY
BALANCE À BANDE TRANSPORTEUSE AVEC BANDE TRANSPORTEUSE ET CORPS DE BANDE TRANSPORTEUSE

(43) Veröffentlichungstag der Anmeldung: 06.03.2024
(62) Teilanmeldung aus: 20202423.8
(73) Patentinhaber: Bizerba SE & Co. KG, 72336 Balingen (DE)
(72) Erfinder: Wehrmann, Johann, 72336 Balingen (DE)
(74) Vertreter: Huber, Meik

(56) Entgegenhaltungen:
- CN-B- 1 915 771
- CN-U- 203 624 355
- DE-A1- 102007 032 270

## Beschreibung

Die vorliegende Erfindung betrifft ein Förderband zum Transportieren von Stückgut, insbesondere für eine Förderbandwaage zum Transportieren und zum Wiegen von Stückgut, insbesondere Wägegut, das einen Förderbandkörper mit einer Oberseite, einer Unterseite und einer sich in Transportrichtung des Stückguts erstreckenden Länge und ein im Betrieb des Förderbands um den Bandkörper umlaufendes Transportband umfasst.

Die EP1427999B1 zeigt ein Förderband für eine Förderbandwaage zum Wiegen einzelner Lebensmittelobjekte. Es wird ein Mechanismus vorgeschlagen, mit dem die Spannung eines Transportbands des Förderbandes optimal aufrechterhalten wird.

Die EP0592349A1 zeig ein Förderband für eine Förderbandwaage zum Wiegen einzelner Objekte. Die Spannung eines Transportbands des Förderbandes wird mit einer schwenkbaren Walze aufrechterhalten.

Die CN1915771B zeigt ein Röntgen-Inspektionssystem mit einem Förderband, welches zu untersuchendes Stückgut an einer Röntgenquelle vorbeitransportiert. Das Förderband wird über mehrere Walzen umgeleitet, angetrieben und gestrafft.

Die CN203624355U zeigt eine Förderbandwaage mit einem Förderband, welches umlaufend um zwei Walzen geführt wird.

Die DE102007032270A1 zeigt eine Förderbandwaage mit integrierter Durchleuchtungseinrichtung zum Wiegen und Prüfen von Stückgut.

Aufgabe der Erfindung ist es, ein Förderband der eingangs genannten Art bereitzustellen, welches bei hohen Geschwindigkeiten eine optimale Laufruhe des Transportbands und bei Verwendung in Verbindung mit einer Förderbandwaage eine Gewichtsermittlung mit hoher Genauigkeit ermöglicht.

Diese Aufgabe wird durch ein Förderband nach Anspruch 1 oder eine Förderbandwaage nach Anspruch 15 gelöst.

Erfindungsgemäß wird ein Förderband zum Transport von Stückgut vorgeschlagen. Bei dem Förderband handelt es sich insbesondere um eine Förderbandwaage. Das Förderband umfasst einen Bandkörper mit einer Oberseite, einer Unterseite und einer sich in Transportrichtung des Stückguts erstreckenden Länge. Des Weiteren umfasst das Förderband ein im Betrieb des Förderbands um den Bandkörper umlaufendes Transportband. An der Unterseite des Bandkörpers ist eine Bandführungseinrichtung zwischen Bandkörper und Transportband angebracht. Die Bandführungseinrichtung umfasst mindestens zwei Wälzlager. Die Innenringe der Wälzlager sind jeweils auf einer Achse angebracht. In einer Ausführungsform handelt es sich bei den Achsen für die Wälzlager um eine gemeinsame Achse. In einer Ausführungsform sind zumindest zwei Wälzlager auf separaten Achsen angebracht, d. h. die Innenringe der Wälzlager sind jeweils auf einer separaten Achse angebracht. Die Achsen sind parallel zueinander und mit Bezug zum Bandkörper ortsfest angeordnet. Ortsfest ist in diesem Zusammenhang nicht so zu verstehen, dass die Achsen nicht drehbar wären. Vielmehr ist die Position der Achsen im Bezug zum Bandkörper bestimmt. Die Außenringe der Wälzlager haben einen direkten Kontakt zum Transportband. In anderen Worten heißt das, das Förderband umfasst eine Bandführungseinrichtung, die Wälzlager aufweist, wobei die Wälzlager zur Bandführung vorgesehen sind. Das Transportband läuft über eine vordere und eine hintere Transportrolle. Auf dem Weg zwischen vorderer und hinterer Transportrolle wird das Transportband durch die Wälzlager gestützt bzw. gespannt. Wälzlager haben den Vorteil, dass sie nicht ausgerichtet oder ausgewuchtet werden müssen. Innenring und Außenring eines Wälzlagers sind exakt aufeinander ausgerichtet. Durch das Anbringen der Wälzlager an der Bandführungseinrichtung wird im Vergleich zu einer Bandführungseinrichtung, die das Transportband mit einer Transportrolle spannt, ein störungsfreierer Lauf des Transportbands erreicht. Eine Transportrolle zum Spannen des Transportbands müsste ausgerichtet werden. Jede Toleranz in der Ausrichtung der Transportrolle würde sich unmittelbar negativ auf die Laufruhe des Transportbands und somit auf die Genauigkeit der Gewichtsermittlung auswirken. Über eine Bandführungseinrichtung, die nur aus einem Abweiserblech besteht, läuft das Transportband ebenfalls unruhig. Des Weiteren würde das Transportband über das Abweiserblech schleifen und schneller verschleißen. Die Wälzlager zum Stützen des Transportbands bieten eine überraschend einfache wie wirkungsvolle Möglichkeit die Nachteile einer Transportwalze oder eines Abweiserblechs zu umgehen. Die Wälzlager sind im Vergleich zur Breite des Transportbands sehr schmal und stützen das Transportband nur punktuell ab. Durch das nur punktuelle Stützen des Transportbands in Richtung quer zur Transportrichtung mit den Außenringen der Wälzlager und das parallele Anordnen der Achsen der Wälzlager ist eine manuelle Ausrichtung der Bandführungseinrichtung nicht notwendig. Außerdem müssen die Wälzlager im Vergleich zu einer Transportrolle bei der Montage nicht in einem separaten Schritt ausgewuchtet werden. Da die Außenringe von Wälzlagern gehärtet sind, kann das Transportband direkt über die Außenringe der Wälzlager laufen, ohne die Wälzlager zu verschleißen.

In einer Ausführungsform besteht die Bandführungseinrichtung aus einer Querstrebe. Die Querstrebe ist an der Unterseite des Bandkörpers, insbesondere zumindest im Wesentlichen mittig angebracht. Die Querstrebe erstreckt sich quer, insbesondere senkrecht zur Transportrichtung, über einen Großteil der Breite des Bandkörpers. Die Querstrebe dient dazu, die Wälzlager zu halten, welche durch direkten Kontakt zum Transportband das Transportband führen. Die Wälzlager stützen an mehreren Punkten verteilt über die Breite des Transportbands das Transportband ab. Die Breite des Transportbands ist in den meisten Fällen gleich oder etwas kleiner als die Breite des Bandkörpers. Die Bandführungseinrichtung, dessen Querstrebe die Wälzlager haltert, hat deswegen eine Breite die gleich oder nur wenig kleiner als die Breite des Transportbands ist. Somit erstreckt sich die Querstrebe über einen Großteil der Breite des Bandkörpers. In einer Ausführungsform erstreckt sich die Querstrebe über mindestens 80% der Breite des Bandkörpers.

In einer Ausführungsform sind die Wälzlager mit Gegenhaltern an der Querstrebe der Bandführungseinrichtung angebracht.

In einer Ausführungsform umfasst die Querstrebe in Bereichen, die für die Aufnahme von Wälzlagern vorgesehen sind, Abkantungen. Die Abkantungen erstrecken sich entlang der Länge der Querstrebe. Damit ist die Richtung der Abkantungen angegeben. Dies soll nicht zwingend so verstanden werden, dass sich die Abkantungen über die gesamte Breite der Querstrebe erstrecken. Durch die Abkantungen bildet sich ein Falz in der Querstrebe. Es entsteht eine V-Form. Diese V-Form, die durch die Abkantungen einfach herzustellen ist, zusammen mit den Gegenhaltern sorgt für ein automatisches Ausrichten der Achsen und somit der Wälzlager in Bezug zum Transportband.

In einer Ausführungsform umfasst die Querstrebe eine durchgängige Abkantung, die sich über die gesamte Länge der Querstrebe erstreckt. So entsteht eine V-Form, um Bereiche, die für die Aufnahme von Wälzlagern vorgesehen sind, zu bilden. Dies hat den Vorteil, dass alle Wälzlager die gleiche Höhe haben, da die Achsen der Wälzlager in der durch die Abkantung gebildeten V-Form anliegen. Bei Achsen und Wälzlagern gleichen Typs befinden sich die Außenflächen der Außenringe der Wälzlager auf gleicher Höhe und bilden so eine optimale Führung des Transportbands.

In einer Ausführungsform werden die Achsen, auf welchen die Innenringe der Wälzlager angebracht sind, mit Gegenhaltern in einer, durch die Abkantungen gebildeten, V-Form der Querstrebe gehaltert. Das heißt, die Achsen werden mittels der V-förmig ausgebildeten Querstrebe und den Gegenhalten zwischen Querstrebe und Gegenhalten ortsfest gehalten. Es ist jedoch unerheblich, ob die Achsen um ihre eigene Achse drehbar sind oder ob die Achsen zwischen Gegenhalter und Querstrebe derart eingeklemmt sind, dass sie sich nicht mehr drehen. Die Wechselwirkung aus den Abkantungen in der Querstrebe und den Gegenhaltern führt dazu, dass sich die Achsen bei der Montage senkrecht zur Transportrichtung ausrichten. Ein separater Schritt zur Ausrichtung ist nicht notwendig.

In einer Ausführungsform umfassen die Gegenhalter jeweils zwei Anschläge, die die Position einer Achse in ihrer axialen Richtung begrenzen. Somit können die Achsen nicht aus dem Bauraum zwischen Querstrebe und Gegenhalter in axialer Richtung herausrutschen.

In einer Ausführungsform weist die Querstrebe die Form einer Rinne auf. Mittig entlang der Achse der Rinne ist eine V-Form ausgebildet. Diese V-Form wird durch die Abkantungen der Querstrebe gebildet. Der Innenwinkel der V-Form ist ein stumpfer Winkel, insbesondere ein Winkel zwischen 135° und 170°, insbesondere zwischen 150° und 170°.

In einer Ausführungsform weisen die seitlichen Enden der rinnenförmigen Querstrebe weitere Abkantungen und Befestigungsöffnungen auf. Die Querstrebe ist an den Befestigungsöffnungen mit dem Bandkörper verschraubt. In einer Ausführungsform weisen die seitlichen Enden der rinnenförmigen Querstrebe weitere Abkantungen auf, mit denen die Querstrebe mit dem Bandkörper vernietet ist. Die weiteren Abkantungen erstrecken sich entlang der Achse der Querstrebe. Die seitlichen Enden beziehen sich auf die seitlichen Begrenzungen der rinnenförmigen Querstrebe und nicht die axialen Enden der rinnenförmigen Querstrebe.

In einer Ausführungsform handelt es sich bei den Wälzlagern um Kugellager oder Rollenlager. Kugellager oder Rollenlager sind leicht zu beziehende und günstige Standardbauteile, deren Innenring und Außenring ausgerichtet sind. Somit ist eine separate Ausrichtung der Führungen für das Transportband, welche durch die Außenringe der Kugellager oder Rollenlager gebildet werden, nicht notwendig.

In einer Ausführungsform ist die Querstrebe aus einem abgekanteten Blech gebildet. Die Achsen, auf denen die Wälzlager angebracht sind, sind auf der dem Bandkörper zugewandten Seite an der Querstrebe angebracht. Die Querstrebe umfasst Aussparungen, durch die die Wälzlager teilweise durch die Querstrebe hindurchragen. Das Transportband berührt zumindest teilweise den Teil der Wälzlager, der durch die Aussparung der Querstrebe hindurchragt. Das Transportband wird punktuell von den Wälzlagern gestützt und läuft über einen Teil der Fläche der Außenringe der Wälzlager. Durch die umlaufende Bewegung des Transportbands und die Berührung der Außenringe der Wälzlager mit dem Transportband, drehen sich die Wälzlager mit einer zum Transportband proportionalen Geschwindigkeit.

In einer Ausführungsform besteht jeder Gegenhalter aus einem V-förmigen Blech. Das Blech ist an seinen Enden abgekantet. Das Blech weist ein Aussparung auf, durch die die Wälzlager teilweise hindurchragen. In einer Ausführungsform sind die Gegenhalter mit der Querstrebe verbunden, insbesondere verschraubt oder vernietet. Der Verlauf der V-Form der Querstrebe in dem Bereich, in dem ein Wälzlager an der Querstrebe mit dem Gegenhalter angebracht ist, ist parallel zum Verlauf der abgekanteten Enden eines Gegenhalters. So ist ein Verschrauben oder Vernieten des Gegenhalters mit der Querstrebe möglich. Die Aussparungen für die Wälzlager in der Querstrebe und die Aussparungen für die Wälzlager in den Gegenhaltern sind auf einander ausgerichtet. Das heißt, sind die Gegenhalter mit der Querstrebe verbunden, so liegen die Aussparungen übereinander. Zwischen Querstrebe und Gegenhaltern sind Hohlräume gebildet, die eine Aufnahme für die Achsen, auf denen die Wälzlager angebracht sind, bilden.

In einer Ausführungsform ragen in die Aussparung des Gegenhalters von beiden Seiten Führungsnoppen, die auf Höhe des Innenrings des Wälzlagers angeordnet sind. So wird das Wälzlager über die Führungsnoppen seitlich gestützt. Ist der Innenring des Wälzlagers nur auf die Achse aufgeschoben, ohne eine feste Verbindung zu bilden, so wird das Wälzlager durch die Führungsnoppen in seiner axialen Position gehalten. Die Achse ist in axialer Richtung soweit bewegbar, wie es die Anschläge zulassen. Dadurch kann auf eine feste Verbindung zwischen Achse und Wälzlager verzichtet werden, was die Produktion erheblich vereinfacht.

Die Erfindung betrifft ferner eine Förderbandwaage mit einer Waageneinheit mit zumindest einer Wägezelle und einem auf die Waageneinheit aufgesetzten Förderband gemäß der vorstehenden Beschreibung.

Einige Ausführungsformen der Erfindung sind in den Zeichnungen beispielhaft gezeigt und nachfolgend beschrieben. Es zeigen, jeweils in schematischer Darstellung:
- Fig. 1: ein erfindungsgemäßes Förderband mit einem Bandkörper und einem Transportband in einer perspektivischen Ansicht,
- Fig. 2: ein erfindungsgemäßes Förderband mit einem Bandkörper ohne Transportband in einer Ansicht von unten,
- Fig. 3: einen Ausschnitt der Bandführungseinrichtung in einer Explosionszeichnung,
- Fig. 4: einen Ausschnitt der Bandführungseinrichtung von der dem Transportband abgewandten Seite,
- Fig. 5: eine Seitenansicht auf das Förderband im Bereich der Bandführungseinrichtung, und
- Fig. 6: einen Gegenhalter zur Montage eines Wälzlagers an einer Querstrebe der Bandführungseinrichtung.

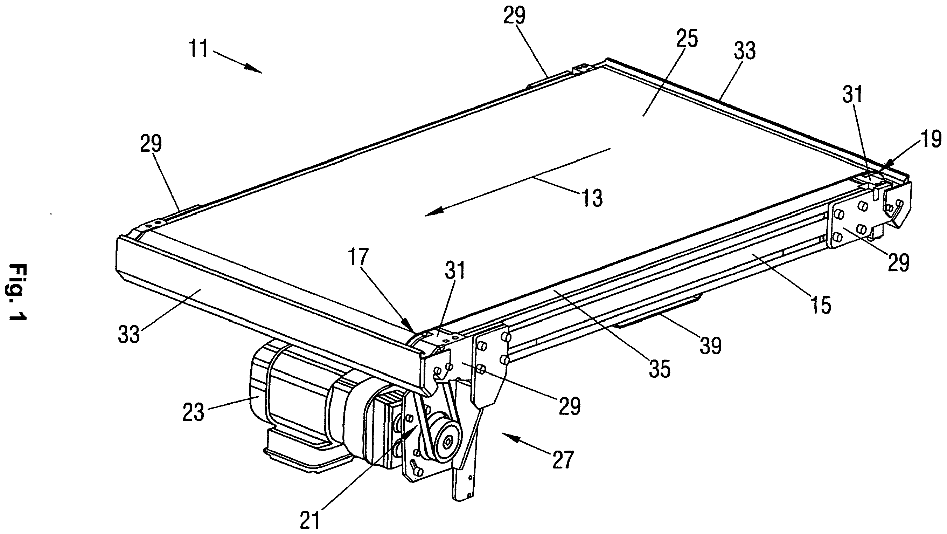

Das in Fig. 1 gezeigte Förderband ist Teil einer Förderbandwaage, beispielsweise eines Checkweighers oder eines Preisauszeichners, die auf eine Waageneinheit mit mindestens einer Wägezelle, insbesondere bis zu vier Wägezellen, der Förderbandwaage aufgesetzt ist. Bei dem gezeigten Förderband handelt es sich dann um ein Wägeband 11. Das Wägeband 11 ist üblicherweise zwischen ein Zuführband und ein Abführband geschaltet, die in einer besonderen Ausführungsform ebenfalls die erfindungsgemäßen Merkmale des Wägebands 11 aufweisen können. Durch das Wägeband 11, insbesondere in Verbindung mit dem Zuführband und dem Abführband, kann Stückgut bzw. Wägegut über die Waageneinheit transportiert werden, um das Gewicht des jeweiligen Stückguts zu bestimmen. Die Gewichtsbestimmung erfolgt in der Regel während des Weitertransports des jeweiligen Stückguts. Grundsätzlich kann zur Gewichtsbestimmung der Transportvorgang jedoch auch angehalten werden. Das Wägeband 11, das das Stückgut in einer Transportrichtung 13 transportiert, umfasst einen Bandkörper 15, insbesondere aus Aluminium, der zwischen einer ersten Transportrolle 17, die als Antriebsrolle ausgebildet ist, und einer zweiten Transportrolle 19, die als Mitlaufrolle ausgebildet ist, angeordnet ist. Die erste Transportrolle 17 und die zweite Transportrolle 19 sind in Fig. 1 größtenteils durch weitere Bestandteile des Wägebands 11, auf die nachstehend noch näher eingegangen wird, verdeckt. Die beiden Transportrollen 17, 19 sind jeweils in zwei Halterungen 29 drehbar gelagert, die zu beiden Seiten des Bandkörpers 15 in der Transportrichtung 13 bzw. entgegen der Transportrichtung 13 von dem Bandkörper 15 abstehen. Die erste Transportrolle 17 wird über ein Riemengetriebe 21 von einem Elektromotor 23 angetrieben, der über eine Halteeinrichtung 27 an dem Bandkörper 15 fest angebracht ist.

Darüber hinaus umfasst das Wägeband 11 ein als Endlosgurt ausgebildetes Transportband 25, das im Betrieb des Wägebands 11 um den Bandkörper 15 und die beiden Transportrollen 17, 19 umläuft. Ferner umfasst das Wägeband 11 vier Abdeckbleche 31, die links und rechts der beiden Transportrollen 17, 19 angeordnet sind, wobei der Einfachheit halber lediglich die beiden in Fig. 1 vorderen Abdeckbleche 31 mit einem Bezugszeichen versehen sind. Darüber hinaus ist ein- und auslaufseitig jeweils eine an dem Bandkörper 15 angebrachte Schutzleiste 33 für das Transportband 25 vorgesehen, über die das Wägeband 11 und ein zumindest auslaufseitig entsprechend ausgebildetes Zuführband und ein zumindest einlaufseitig entsprechend ausgebildetes Abführband Stoß-auf-Stoß aneinandergereiht werden können.

Um das Gewicht der über die Waageneinheit transportierten Stückgüter mit möglichst hoher Genauigkeit bestimmen zu können, ist es erforderlich, dass das Obertrum des Transportbands 25 auf einer möglichst ebenen Oberfläche aufliegt bzw. über eine möglichst ebene Oberfläche hinweggleiten kann. Um dies zu erreichen, weist das Wägeband 11 eine Deckplatte 35 auf, insbesondere aus Metall, die zwischen der Oberseite des Bandkörpers 15 und dem Obertrum des Transportbands 25 angeordnet ist, so dass das Obertrum des Transportbands 25 auf der Deckplatte 35 aufliegt. Die Deckplatte 35 erstreckt sich dabei in Transportrichtung 13 über die gesamte Länge des Bandkörpers 15 und steht beidseitig unter dem Obertrum des Transportbands 25 hervor.

Darüber hinaus ist an der Unterseite des Bandkörpers 15, zumindest im Wesentlichen mittig, eine Bandführungseinrichtung mit einer Querstrebe 39 angebracht, die sich quer, insbesondere senkrecht zur Transportrichtung 13 über einen Großteil der Breite oder über die gesamte Breite des Bandkörpers 15 erstreckt. Durch die Bandführungseinrichtung wird ein ruhiger Lauf des Untertrums des Transportbands 25 gewährleistet.

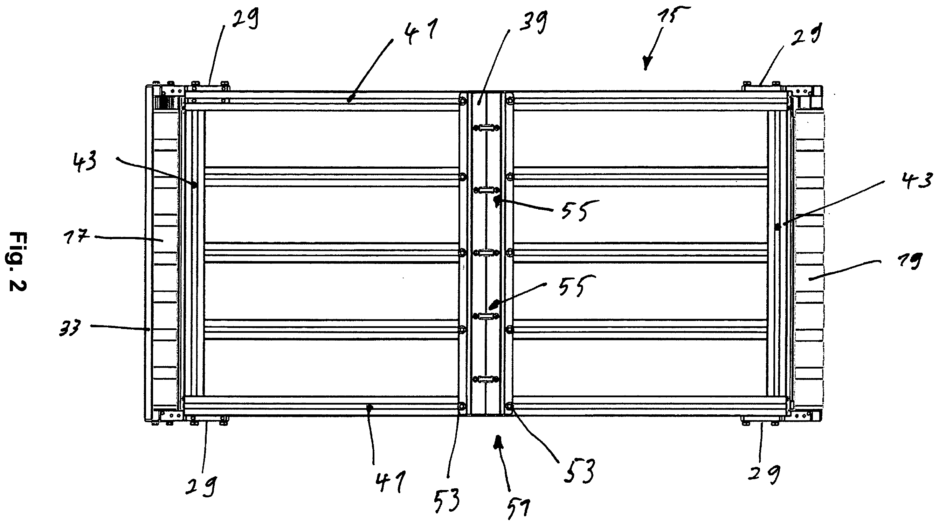

Fig. 2 zeigt ein erfindungsgemäßes Wägeband 11 in einer Ansicht von unten. Der Übersichtlichkeit halber ist das Transportband nicht gezeigt. Der Bandkörper 15 besteht aus einer Profilanordnung aus mehreren Profilen 41, 43. In dem gezeigten Beispiel umfasst die Profilanordnung fünf sich in Transportrichtung 13 des Stückguts erstreckende Profile 41 und zwei sich quer zur Transportrichtung 13 des Stückguts erstreckende Profile 43. Bei den Profilen 41, 43 handelt es sich jeweils um Strangpressprofile, insbesondere aus Aluminium. Der Bandkörper 15 bildet das Gerüst des Förderbandes, insbesondere des Wägebands 11 einer Transportwaage und haltert weitere Komponenten des Wägebands 11, insbesondere die Transportrollen 17, 19, die mittels Halterungen 29 am Bandkörper 15 befestigt sind. Eine Bandführungseinrichtung 51 besteht aus einer Querstrebe 39, die sich quer, insbesondere senkrecht zur Transportrichtung 13 erstreckt und zumindest im Wesentlichen mittig mit Schrauben 53 an der Unterseite des Bandkörpers 15 angebracht ist. Die Bandführungseinrichtung 51 umfasst Wälzlager 55, die an der Querstrebe 39 an der dem Bandkörper 15 zugewandten Seite angebracht sind und in Richtung des Untertrums des Transportbands zumindest teilweise durch die Querstrebe 39 hindurchragen.

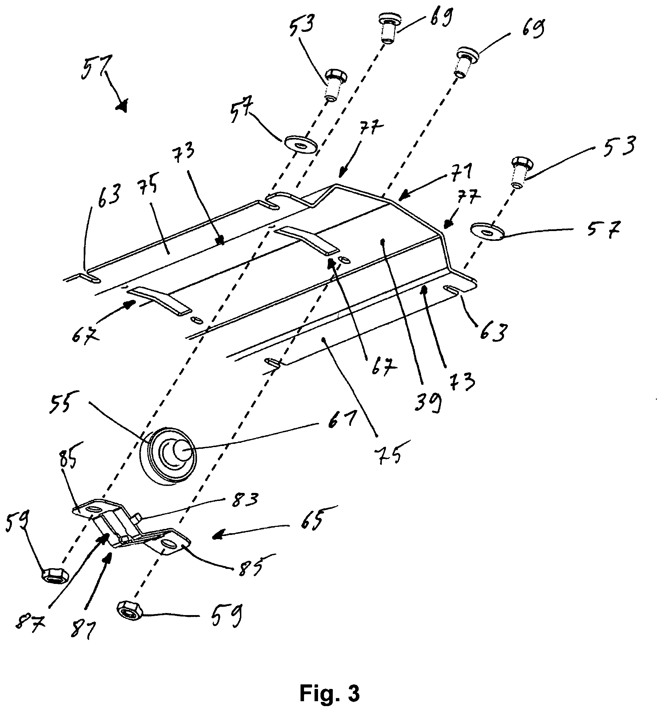

Fig. 3 zeigt eine Explosionszeichnung der Bandführungseinrichtung 51. Die Querstrebe 39 ist zum Teil gezeigt. Die Querstrebe 39 ist gebildet durch ein abgekantetes Blech, so dass mittig entlang der Längsachse der Querstrebe 39 durch eine mittlere Abkantung 71 ein Falz entsteht, der eine V-form bildet. Der Innenwinkel der V-Form ist ein stumpfer Winkel, insbesondere ein Winkel zwischen 135° und 170°, insbesondere zwischen 150° und 170°. Durch jeweils eine weitere Abkantung 77 auf beiden Seiten des Falzes bildet die Querstrebe 39 die Form einer Rinne aus. Durch jeweils eine weitere Abkantung 73 sind zwei Befestigungsschienen 75 an den Außenseiten der Querstrebe 39 gebildet. Die Befestigungsschienen 75 sind waagrecht ausgebildet und umfassen Befestigungsöffnungen 63, mit denen die Querstrebe 39 mittels Schrauben 53 und Unterlegscheiben 57 am Bandkörper 15, insbesondere an den parallel zur Transportrichtung 13 angeordneten Profilen 41, befestigt sind. Entlang der Längsrichtung der Querstrebe 39 sind Aussparungen 67 angebracht, die sich im Bereich des durch die mittlere Abkantung 71 gebildeten Falzes befinden. Die Aussparungen 67 haben eine rechteckige, längliche Form, deren Längsseite entlang der Transportrichtung 13 orientiert ist. Durch die Aussparungen 67 ragen die Wälzlager 55 teilweise durch die Querstrebe 39. Insbesondere sind mehrere Aussparungen 67 für mehrere Wälzlager 55 vorgesehen, die insbesondere in regelmäßigen Abständen entlang der Längsrichtung der Querstrebe 39 angeordnet sind. Die Wälzlager 55 sind handelsübliche Wälzlager, insbesondere Kugellager oder Rollenlager mit einem Innenring und einem Außenring, wobei der Innenring und der Außenring über eine Lageranordnung zueinander beweglich, das heißt gegeneinander rotierbar angeordnet sind. Der Innenring der Wälzlager ist auf eine Achse 61 aufgesteckt. Das Wälzlager 55 ist zusammen mit der Achse auf der Innenseite der Querstrebe 39, das heißt innerhalb der Rinne der Querstrebe 39 angebracht. Diese Seite ist die dem Bandkörper 15 zugewandte Seite. Die Achse 61 ist entlang des durch die mittlere Abkantung 71 gebildeten Falzes orientiert und findet in diesem Falz Halt in ihrer radialen Richtung. Das Wälzlager und die Achse 61 sind mit Hilfe eines Gegenhalters 65 fixiert. Der Gegenhalter 65 ist mit Schrauben 69 und Muttern 59 im Bereich der Aussparung 67 auf der dem Bandkörper 15 zugewandten Seite der Querstrebe 39 befestigt. Der Gegenhalter 85 besteht aus einem V-förmigen Blech. Die V-Form ist durch eine mittlere Abkantung 81 gebildet. Die Enden des Blechs sind abgekantet und bilden Befestigungslaschen 85, die parallel zur V-Form der Querstrebe 39 verlaufen. Mittels der Befestigungslaschen 85 wird der Gegenhalter 65 mit Schrauben 69 und Muttern 59 an der Querstrebe 39 angebracht.

Der Gegenhalter 65 umfasst eine Aussparung 87, durch die das Wälzlager 55 teilweise hindurch ragt. Der Gegenhalter 65 umfasst auf jeder Seite einen Anschlag 83, die ein axiales Verschieben der Achse 61 begrenzen.

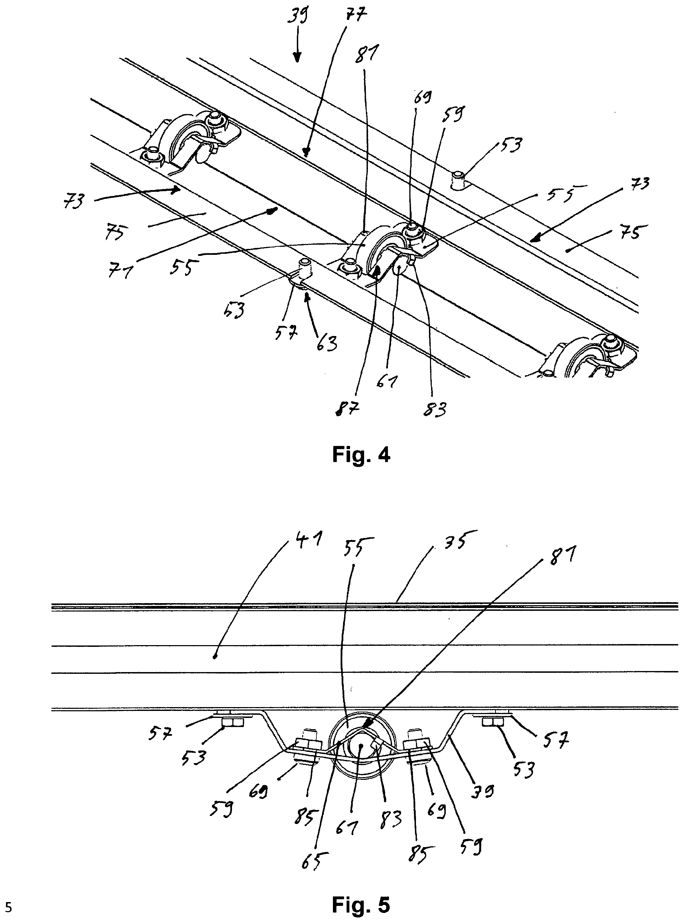

In Fig. 4 ist ein Ausschnitt aus der Bandführungseinrichtung 51 gezeigt. Die Wälzlager 55 sind mittels der Gegenhalter 65 an der Querstrebe 39 angebracht. Die Ansicht zeigt die Bandführungseinrichtung 51 von der dem Bandkörper 15 zugewandten Seite.

In Fig. 5 ist eine Seitenansicht auf das Förderband im Bereich der Bandführungseinrichtung gezeigt. Das Transportband ist der Übersichtlichkeit halber nicht gezeigt. Fig. 5 zeigt, wie die Querstrebe 39 mit Schrauben 53 und Unterlegscheiben 57 an den Befestigungsöffnungen der Befestigungsschienen mit dem Profil verschraubt ist. Die Achse 61, auf der der Innenring des Wälzlagers 55 angebracht ist, liegt in der V-Form der Querstrebe 39, die durch die mittlere Abkantung gebildet ist. Der Gegenhalter 65, der durch eine Abkantung 81 eine der Querstrebe 39 gegenläufige V-Form bildet, ist Mittels Schrauben 69 und Muttern 59 an seinen Befestigungslaschen 85 mit der Querstrebe 39 verschraubt. Gegenläufig heißt nicht, dass die V-Form der Querstrebe 39 und die V-Form des Gegenhalters 65 den gleichen Winkel haben, sondern dass ihre Richtung gegenläufig orientiert ist. So bildet sich zwischen Querstrebe 39 und Gegenhalter 65 ein Bauraum, in dem die Achse 61 Platz findet. Um ein Verrutschen in axialer Richtung der Achse 61 zu verhindern, umfasst der Gegenhalter 65 einen Anschlag 83. Auf der der Querstrebe 39 gegenüberliegenden Seite des Profils 41 des Bandkörpers 15 ist eine Deckplatte 35 angebracht, über die das Transportband (nicht gezeigt) gleitet. Das Wälzlager 55 ragt durch die Aussparung durch die Querstrebe 39 und bildet unterhalb der Querstrebe 39, an der dem Profil 41 abgewandten Seite eine Auflage für das umlaufende Transportband. Das umlaufende Transportband wird durch einen Teil der Außenseite des Außenrings des Wälzlagers 55 gestützt.

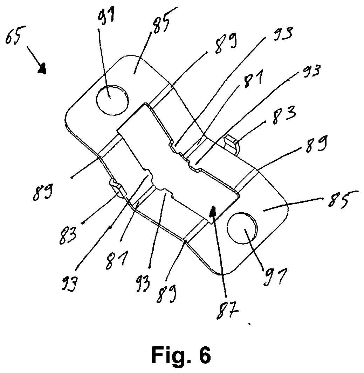

Fig. 6 zeigt einen Gegenhalter 65 zur Montage eines Wälzlagers an einer Querstrebe der Bandführungseinrichtung. Der Gegenhalter 65 ist ein Blechbiegeteil, das mittels einer mittleren Abkantung 81 eine V-Form bildet. Jeweils eine weitere Abkantung 89 zu den Enden hin bildet jeweils eine Befestigungslasche 85. Die Befestigungslaschen 85 verlaufen parallel zur V-Form der Querstrebe, an die der Gegenhalter 65 geschraubt wird. Zum Verschrauben des Gegenhalters 65 an der Querstrebe weisen die Befestigungslaschen 85 eine Bohrung auf. Ist der Gegenhalter 65 mit der Querstrebe verschraubt, so bildet sich durch die V-Form des Gegenhalters 65 und die V-Form der Querstrebe ein Hohlraum, in der eine Achse, die ein Wälzlager trägt, aufgenommen werden kann. Da die V-Form der Querstrebe 39 und die V-Form des Gegenhalters 65 unterschiedliche Winkel haben können, muss der Hohlraum keinen rechtwinkligen Querschnitt aufweisen. Um ein ausgeprägtes Verrutschen der Achse in axialer Richtung zu verhindern, ist auf beiden Seiten des Gegenhalters ein Anschlag 83 vorhanden. Die Distanz zwischen beiden Anschlägen 83 ist etwas größer als die Länge der Achse, so dass die Achsen in axialer Richtung etwas Spiel haben. Der Gegenhalter umfasst eine Aussparung 87 durch die das Wälzlager, welches auf einer Achse angebracht ist, hindurchragt. In die Aussparung 87 ragen von beiden Seiten Führungsnoppen 93, die auf Höhe des Innenrings des Wälzlagers angeordnet sind und die Innenringe der Wälzlager berühren. So wird verhindert, dass das Wälzlager innerhalb der Aussparung entlang der Achse verrutscht.

## Patentansprüche

1. Förderband zum Transport von Stückgut, insbesondere für eine Förderbandwaage, das einen Bandkörper (15) mit einer Oberseite, einer Unterseite und einer sich in Transportrichtung (13) des Stückguts erstreckenden Länge und ein im Betrieb des Förderbands um den Bandkörper (15) umlaufendes Transportband (25) umfasst, wobei an der Unterseite des Bandkörpers eine Bandführungseinrichtung (51) zwischen Bandkörper (15) und Transportband (25) angebracht ist, **dadurch gekennzeichnet, dass** die Bandführungseinrichtung (51) mindestens zwei Wälzlager (55) umfasst, wobei die Innenringe der Wälzlager (55) auf jeweils einer Achse (61) angebracht sind und die Achsen (61) parallel zueinander und mit Bezug zum Bandkörper (15) ortsfest angeordnet sind, und wobei die Außenringe der Wälzlager (55) direkten Kontakt zum Transportband (25) haben, und wobei die Wälzlager im Vergleich zur Breite des Transportbandes schmal sind und das Transportband punktuell abstützen.

2. Förderband nach Anspruch 1, **dadurch gekennzeichnet, dass** die Bandführungseinrichtung (51) aus einer Querstrebe (39) besteht, die an der Unterseite des Bandkörpers (15), insbesondere zumindest im Wesentlichen mittig angebracht ist, und die sich quer, insbesondere senkrecht zur Transportrichtung (13) über einen Großteil der Breite oder über die gesamte Breite des Bandkörpers (15) erstreckt.

3. Förderband nach Anspruch 2, **dadurch gekennzeichnet, dass** die Wälzlager (55) mit Gegenhaltern (65) an der Querstrebe (39) der Bandführungseinrichtung (51) angebracht sind.

4. Förderband nach Anspruch 2 oder 3, **dadurch gekennzeichnet, dass** die Querstrebe (39) in Bereichen, die für die Aufnahme von Wälzlagern (55) vorgesehen sind, Abkantungen (71) umfasst, die sich entlang der Länge der Querstrebe (39) erstrecken.

5. Förderband nach Anspruch 4, **dadurch gekennzeichnet, dass** die Querstrebe (39) eine durchgängige Abkantung (71) umfasst, die sich über die gesamte Länge der Querstrebe (39) erstreckt, um Bereiche, die für die Aufnahme von Wälzlagern (55) vorgesehen sind, zu bilden.

6. Förderband nach Anspruch 4 oder 5, **dadurch gekennzeichnet, dass** die Achsen (61), auf welchen die Innenringe der Wälzlager (55) angebracht sind, mit Gegenhaltern (65) in einer, durch die Abkantungen (71) gebildeten V-Form der Querstrebe (39) gehaltert werden.

7. Förderband nach einem der Ansprüche 1 bis 6, **dadurch gekennzeichnet, dass** die Gegenhalter (65) jeweils zwei Anschläge (83) umfassen, die die Position einer Achse (61) in ihrer axialen Richtung begrenzen.

8. Förderband nach einem der Ansprüche 2 bis 7, **dadurch gekennzeichnet, dass** die Querstrebe (39) die Form einer Rinne aufweist, die mittig entlang ihrer Achse eine V-Form aufweist, wobei der Innenwinkel ein stumpfer Winkel ist, insbesondere ein Winkel zwischen 135° und 170°, insbesondere zwischen 150° und 170°.

9. Förderband nach Anspruch 8, **dadurch gekennzeichnet, dass** die seitlichen Enden der rinnenförmigen Querstrebe (39) weitere Abkantungen (73, 77) und Befestigungsöffnungen (63) aufweisen, wobei die Querstrebe (39) an den Befestigungsöffnungen (63) mit dem Bandkörper (15) verschraubt ist.

10. Förderband nach einem der Ansprüche 1 bis 9, **dadurch gekennzeichnet, dass** es sich bei den Wälzlagern (55) um Kugellager oder Rollenlager handelt.

11. Förderband nach einem der Ansprüche 2 bis 10, **dadurch gekennzeichnet, dass** die Querstrebe (39) aus einem abgekanteten Blech gebildet ist, wobei die Achsen (61), auf denen die Wälzlager (55) angebracht sind, auf der dem Bandkörper (15) zugewandten Seite an der Querstrebe (39) angebracht sind und die Querstrebe (39) Aussparungen (67) umfasst, durch die die Wälzlager (55) teilweise durch die Querstrebe (39) hindurchragen, und dass das Transportband (25) zumindest teilweise den Teil der Wälzlager (55) berührt, der durch die Aussparung (67) der Querstrebe (39) hindurchragt.

12. Förderband nach einem der Ansprüche 3 bis 11, **dadurch gekennzeichnet, dass** jeder Gegenhalter (65) aus einem V-förmigen Blech besteht, das an seinen Enden abgekantet ist und das eine Aussparung (87) aufweist, durch die die Wälzlager (55) teilweise hindurchragen.

13. Förderband nach Anspruch 12, **dadurch gekennzeichnet, dass** die Gegenhalter (65) mit der Querstrebe (39) verbunden, insbesondere verschraubt oder vernietet sind und die Aussparungen (67) für die Wälzlager in der Querstrebe (39) und die Aussparungen (87) für die Wälzlager (55) in den Gegenhaltern (65) auf einander ausgerichtet sind und zwischen Querstrebe (39) und Gegenhaltern (65) Hohlräume gebildet sind, die eine Aufnahme für die Achsen (61), auf denen die Wälzlager (55) angebracht sind, bilden.

14. Förderband nach einem der Ansprüche 12 bis 13, **dadurch gekennzeichnet, dass** in die Aussparung (87) des Gegenhalters (65) von beiden Seiten Führungsnoppen (93) ragen, die auf Höhe des Innenrings des Wälzlagers (55) angeordnet sind.

15. Förderbandwaage mit einer Waageneinheit mit zumindest einer Wägezelle und einem auf die Waageneinheit aufgesetzten Förderband gemäß einem der vorstehenden Ansprüche.

## Claims

1. Conveyor belt for transporting articles, in particular for a conveyor-belt scale, comprising a belt body (15) with a top side, with a bottom side and with a length which extends in the transporting direction (13) of the articles, and comprising a transport belt (25) which circulates around the belt body (15) during the operation of the conveyor belt, wherein, on the bottom side of the belt body, a belt-guiding device (51) is fitted between belt body (15) and transport belt (25), **characterized in that** the belt-guiding device (51) comprises at least two rolling bearings (55), wherein the inner rings of the rolling bearings (55) are fitted on respective pins (61) and the pins (61) are arranged parallel to one another and so as to be positionally fixed in relation to the belt body (15), and wherein the outer rings of the rolling bearings (55) are directly in contact with the transport belt (25), and wherein the rolling bearings are narrow in relation to the width of the transport belt and support the transport belt in a punctiform manner.

2. Conveyor belt according to Claim 1, **characterized in that** the belt-guiding device (51) consists of a transverse strut (39) which is fitted, in particular at least substantially centrally, on the bottom side of the belt body (15), and which extends transversely, in particular perpendicularly, to the transporting direction (13) over a large part of the width or over the entire width of the belt body (15).

3. Conveyor belt according to Claim 2, **characterized in that** the rolling bearings (55) are fitted on the transverse strut (39) of the belt-guiding device (51) by way of counter-holders (65).

4. Conveyor belt according to Claim 2 or 3, **characterized in that** the transverse strut (39) comprises angled portions (71), which extend along the length of the transverse strut (39), in regions intended for receiving rolling bearings (55).

5. Conveyor belt according to Claim 4, **characterized in that** the transverse strut (39) comprises a continuous angled portion (71) which extends over the entire length of the transverse strut (39), so as to form regions intended for receiving rolling bearings (55).

6. Conveyor belt according to Claim 4 or 5, **characterized in that** the pins (61) on which the inner rings of the rolling bearings (55) are fitted are held by counter-holders (65) in a V shape, formed by the angled portions (71), of the transverse strut (39).

7. Conveyor belt according to one of Claims 1 to 6, **characterized in that** the counter-holders (65) each comprise two stops (83) which limit the position of a pin (61) in its axial direction.

8. Conveyor belt according to one of Claims 2 to 7, **characterized in that** the transverse strut (39) has the shape of a channel that centrally has a V shape along its axis, wherein the internal angle is an obtuse angle, in particular an angle between 135° and 170°, in particular between 150° and 170°.

9. Conveyor belt according to Claim 8, **characterized in that** the lateral ends of the channel-shaped transverse strut (39) have further angled portions (73, 77) and fastening openings (63), wherein the transverse strut (39) is screwed to the belt body (15) at the fastening openings (63).

10. Conveyor belt according to one of Claims 1 to 9, **characterized in that** the rolling bearings (55) are ball bearings or roller bearings.

11. Conveyor belt according to one of Claims 2 to 10, **characterized in that** the transverse strut (39) is formed from an angled metal sheet, wherein the pins (61) on which the rolling bearings (55) are fitted are fitted on the transverse strut (39) on the side that is directed towards the belt body (15), and the transverse strut (39) comprises cutouts (67) by way of which the rolling bearings (55) partially project through the transverse strut (39), and **in that** the transport belt (25) is at least partially in contact with that part of the rolling bearings (55) which projects through the cutout (67) of the transverse strut (39).

12. Conveyor belt according to one of Claims 3 to 11, **characterized in that** each counter-holder (65) consists of a V-shaped metal sheet which is angled at its ends and which has a cutout (87) through which the rolling bearings (55) partially project.

13. Conveyor belt according to Claim 12, **characterized in that** the counter-holders (65) are connected, in particular screwed or riveted, to the transverse strut (39), and the cutouts (67) for the rolling bearings in the transverse strut (39) and the cutouts (87) for the rolling bearings (55) in the counter-holders (65) are aligned with one another, and, between transverse strut (39) and counter-holders (65), there are formed cavities that form a receptacle for the pins (61) on which the rolling bearings (55) are fitted.

14. Conveyor belt according to either of Claims 12 and 13, **characterized in that** guide protuberances (93) project from both sides into the cutout (87) of the counter-holder (65) and are arranged at the height of the inner ring of the rolling bearing (55).

15. Conveyor-belt scale having a scale unit with at least one weighing cell and a conveyor belt according to one of the preceding claims positioned on the scale unit.

## Revendications

1. Convoyeur à bande pour le transport de marchandises, en particulier pour une balance à convoyeur à bande, qui comprend un corps de convoyeur (15) avec un côté supérieur, un côté inférieur et une longueur s'étendant dans la direction (13) de transport des marchandises, et une bande de transport (25) tournant autour du corps de convoyeur (15) pendant le fonctionnement du convoyeur à bande, un dispositif (51) de guidage de bande étant monté sur le côté inférieur du corps de convoyeur entre le corps de convoyeur (15) et la bande de transport (25), **caractérisé en ce que** le dispositif (51) de guidage de bande comprend au moins deux roulements (55), les bagues intérieures des roulements (55) étant montées chacune sur un axe (61) et les axes (61) étant parallèles entre eux et fixes par rapport au corps de convoyeur (15), et les bagues extérieures des roulements (55) étant en contact direct avec la bande de transport (25), et les roulements étant étroits en comparaison de la largeur de la bande de transport et soutenant ponctuellement la bande de transport.

2. Convoyeur à bande selon la revendication 1, **caractérisé en ce que** le dispositif (51) de guidage de bande est constitué d'une traverse (39) qui est montée sur le côté inférieur du corps de convoyeur (15), en particulier au moins sensiblement au milieu, et qui s'étend transversalement, en particulier perpendiculairement, à la direction de transport (13), sur une grande partie de la largeur ou sur toute la largeur du corps de convoyeur (15).

3. Convoyeur à bande selon la revendication 2, **caractérisé en ce que** les roulements (55) sont montés avec des contre-supports (65) sur la traverse (39) du dispositif (51) de guidage de bande.

4. Convoyeur à bande selon la revendication 2 ou 3, **caractérisé en ce que** la traverse (39) comprend, dans des zones prévues pour recevoir des roulements (55), des pliages (71) qui s'étendent sur la longueur de la traverse (39).

5. Convoyeur à bande selon la revendication 4, **caractérisé en ce que** la traverse (39) comprend un pliage continu (71) qui s'étend sur toute la longueur de la traverse (39) pour former des zones destinées à recevoir des roulements (55).

6. Convoyeur à bande selon la revendication 4 ou 5, **caractérisé en ce que** les axes (61) sur lesquels sont montées les bagues intérieures des roulements (55) sont maintenues par des contre-supports (65) en forme de V de la traverse (39) formés par les plis (71).

7. Convoyeur à bande selon l'une quelconque des revendications 1 à 6, **caractérisé en ce que** les contre-supports (65) comprennent chacun deux butées (83) qui limitent la position d'un axe (61) dans sa direction axiale.

8. Convoyeur à bande selon l'une quelconque des revendications 2 à 7, **caractérisé en ce que** la traverse (39) a la forme d'une gouttière présentant une forme en V centrée le long de son axe, l'angle intérieur étant un angle obtus, notamment un angle compris entre 135° et 170°, en particulier entre 150° et 170°.

9. Convoyeur à bande selon la revendication 8, **caractérisé en ce que** les extrémités latérales de la traverse (39) en forme de gouttière présentent d'autres pliages (73, 77) et des ouvertures de fixation (63), la traverse (39) étant vissée au corps de convoyeur (15) au niveau des ouvertures de fixation (63).

10. Convoyeur à bande selon l'une quelconque des revendications 1 à 9, **caractérisé en ce que** les roulements (55) sont des roulements à billes ou à rouleaux.

11. Convoyeur à bande selon l'une des revendications 2 à 10, **caractérisé en ce que** la traverse (39) est formée d'une tôle pliée, les axes (61) sur lesquels sont montés les roulements (55) étant montés sur la traverse (39) du côté tourné vers le corps de convoyeur (15) et la traverse (39) comprenant des évidements (67), à travers lesquels les roulements (55) font partiellement saillie à travers la traverse (39), et **en ce que** la bande de transport (25) est au moins partiellement en contact avec la partie des roulements (55) qui fait saillie à travers l'évidement (67) de la traverse (39).

12. Convoyeur à bande selon l'une quelconque des revendications 3 à 11, **caractérisé en ce que** chaque contre-support (65) est constitué d'une tôle en forme de V pliée à ses extrémités et présentant un évidement (87) à travers lequel les roulements (55) font partiellement saillie.

13. Convoyeur à bande selon la revendication 12, **caractérisé en ce que** les contre-supports (65) sont reliés à la traverse (39), notamment vissés ou rivetés, et les évidements (67) pour les roulements dans la traverse (39) et les évidements (87) pour les roulements (55) dans les contre-supports (65) sont alignés les uns avec les autres, et des espaces creux sont formés entre la traverse (39) et les contre-supports (65), lesquels forment un logement pour les axes (61) sur lesquels sont montés les roulements (55).

14. Convoyeur à bande selon l'une quelconque des revendications 12 à 13, **caractérisé en ce que** des plots de guidage (93) font saillie de part et d'autre de l'évidement (87) du contre-support (65) et sont disposés au niveau de la bague intérieure du roulement (55).

15. Balance à convoyeur à bande comprenant une unité de pesage ayant au moins une cellule de pesage et un convoyeur à bande selon l'une des revendications précédentes, placé sur l'unité de pesage.
